# EUROPÄISCHE PATENTSCHRIFT

(11) **EP 3 998 986 B1**
(45) Veröffentlichungstag und Bekanntmachung des Hinweises auf die Patenterteilung: **30.09.2026**
(21) Anmeldenummer: 20742164.5
(22) Anmeldetag: 07.07.2020
(51) Int. Cl.: A61C 8/00

(54) **ABDRUCKPFOSTEN ZUM VERBINDEN MIT EINEM ZAHNIMPLANTAT**
IMPRESSION POST FOR CONNECTION TO A DENTAL IMPLANT
CHAPE DE TRANSFERT À RELIER À UN IMPLANT DENTAIRE

(30) Priorität: 19.07.2019 DE 102019005040
(43) Veröffentlichungstag der Anmeldung: 25.05.2022
(73) Patentinhaber: Champions Dental International GmbH, 8853 Lachen (CH)
(72) Erfinder: NEDJAT, Armin, 8853 Lachen (CH); BOMBA, Norbert, 65199 Wiesbaden (DE)
(74) Vertreter: Wesch, Arno
(86) Internationale Anmeldenummer: PCT/EP2020/000127
(87) Internationale Veröffentlichungsnummer: WO 2021/013376

(56) Entgegenhaltungen:
- EP-A2- 2 990 008
- EP-A2- 2 990 008
- EP-B1- 1 089 671
- WO-A1-2008/120877
- WO-A1-2008/120877
- WO-A2-2019/030525
- WO-A2-2019/030525
- US-A- 5 899 695
- US-A- 5 899 695
- US-A1- 2009 130 629
- US-A1- 2016 346 066

## Beschreibung

Die Erfindung betrifft einen Abdruckpfosten zum Verbinden mit einem Zahnimplantat gemäß dem Oberbegriff des Anspruchs 1.

Ein solcher Abdruckpfosten ist aus der US 2016/346066 A1 bereits bekannt.

Die US 2009/130629 A1 zeigt ein abgewinkeltes Abutment zur Verbindung mit einem Zahnimplantat.

Die EP 1 089 671 B1 zeigt einen mit einem Implantatkörper verbindbaren Kern und eine Führungshülse, wobei der Kern und die Führungshülse miteinander korrespondierende Positionierungselemente aufweisen.

Aus dem Stand der Technik ist es bekannt, einen Implantatkörper mit Hilfe eines Werkzeugs in den Kieferknochen eines Menschen einzuschrauben, um fehlende Zahnwurzeln zu ersetzen. Nach dem Einsetzen des Implantatkörpers in den Kiefer knochen wird der Implantatkörper üblicherweise durch eine Abdeckschraube verschlossen, um das Eindringen von Keimen zu verhindern. Die Anordnung aus Implantatkörper und Abdeckschraube verbleibt für eine bestimmte Zeit ohne weitere Bearbeitung im Kiefer des Patienten, um ein Verwachsen des Kieferknochens mit dem Implantatkörper zu ermöglichen. Später wird die Abdeckschraube vom Implantatkörper gelöst und stattdessen ein sogenannter Gingivaformer auf den Implantatkörper aufgesetzt. Der Gingivaformer soll das Zahnfleisch auf die Aufnahme eines Zahnersatzes vorbereiten. Der Gingivaformer ist üblicherweise in seiner Form an den später aufzusetzenden Zahnersatz angepasst und bewirkt eine entsprechende Formung des Zahnfleisches. In einem weiteren Behandlungstermin wird ein Abdruck vorgenommen. Hierzu wird der Gingivaformer durch einen sogenannten Abdruckpfosten ersetzt. Zudem wird der gingivafreie Bereich, der vom Gingivaformer für den späteren Zahnersatz geschaffen wurde, mit einer speziellen Masse ausgespritzt, so dass der spätere Zahnersatz auch die gewünschte auf die Gingiva angepasste Form erhält. So kann zudem in einem zahnmedizinischen Labor die Position des späteren Zahnersatzes im Kiefer nachgestellt werden und der Zahnersatz kann zum Aufsetzen auf den Implantatkörper vorbereitet werden. In einem weiteren Termin wird der im Labor vorgefertigte Zahnersatz aufgesetzt. Hierfür wird zunächst auf den eingeschraubten Implantatkörper ein sogenanntes Abutment aufgesetzt und im Implantatkörper verankert, nämlich bevorzugt verschraubt. Auf das Abutment wird in einem letzten Arbeitsschritt der künstliche Zahnersatz abschließend aufgesetzt. Bei den vorstehenden Arbeitsschritten ist insbesondere darauf zu achten, dass ein Eindringen von Keimen in das Innere des Implantatkörpers vermieden wird.

Nachteilig an dem Stand der Technik ist, dass das Ergebnis des Ausspritzens des gingivafreien Bereichs mit der speziellen Masse zum einen vom handwerklichen Geschick des ausführenden Arztes abhängt und somit nicht immer eine gleichbleibende Qualität aufweist. Zum andern erfordert das Ausspritzen einen vergleichsweise hohen Zeitaufwand.

Ausgehend von diesem Stand der Technik ist es Aufgabe der Erfindung, einen Abdruckpfosten anzugeben, der die vorstehenden Nachteile vermeidet oder zumindest verringert.

Die Aufgabe wird gelöst durch einen Abdruckpfosten zum Verbinden mit einem Zahnimplantat, wobei ein Pfostenelement mit dem Zahnimplantat verbindbar ist. Der Abdruckpfosten ist dadurch gekennzeichnet, dass ein ringförmiges Emergenzelement durch ein Positionierungselement mit dem Pfostenelement lösbar verbunden ist, dass ein Innendurchmesser des Emergenzelements auf einen Außendurchmesser eines axialen Abschnitts am Pfostenelement angepasst ist, und dass durch das Positionierungselement das Emergenzelement an einer vorgebbaren axialen Position einer Längserstreckung des Pfostenelements gehalten ist.

Die Grundidee der Erfindung besteht darin, anstelle des bisher bekannten einstückigen Abdruckpfostens einen Abdruckpfosten anzugeben, der zwei Bauelemente hat, und ein Pfostenelement sowie ein Emergenzelement aufweist. Das Emergenzelement ist in vorteilhafter Weise mit dem Pfostenelement so verbunden, dass es - wenn der Abdruckpfosten in das Implantat eingesetzt ist - genau an der Stelle positioniert ist, wo zuvor der Gingivaformer war. Zudem ist die Gestalt der zur Gingiva weisenden Seite des Emergenzelements so gewählt, dass sie dem Gingivaformer entspricht. Entsprechend ist es innerhalb des Erfindungsgedankens, dass es eine Vielzahl von Emergenzelementen gibt, die je nach Bedarf eines Patienten mit dem Pfostenelement verbindbar sind. Hierfür ist das Emergenzelement mit dem Pfostenelement lösbar verbunden. Die zur Gingiva weisende Seite des Gingivaformers und der entsprechenden Seite des Emergenzelements für einen konkreten Behandlungsfall sind daher aufeinander abgestimmt, während die zum Pfostenelement weisende Seite jedes Emergenzelements im Wesentlichen gleich gestaltet sind, so dass sie mit jeweils einem bestimmten Pfostenelement verbindbar sind. Der behandelnde Arzt ist also durch eine einfache Auswahl eines Emergenzelements, das der durch den Gingivaformer geformten Gingiva entspricht, in der Lage durch das Verbinden des gewählten Emergenzelements mit dem standardisierten Pfostenelement einen Abdruckpfosten zu erhalten, der genau auf die zuvor geformten Gingiva angepasst ist. Man kann auch sagen, dass der Abdruckpfosten durch das Pfostenelement zusammen mit dem Emergenzelement für den Bereich des Zahnfleisches des Patienten zusätzlich zu seiner Abdruckpfostenfunktion auf die Gestalt des Gingivaformers angepasst ist. Das bisherige Ausspritzen mit einer speziellen Masse um die Gestalt des Gingivaformers nachzubilden entfällt vorteilhafterweise vollständig. Entsprechend schneller sind auch das Einsetzen des Abdruckpfostens sowie das Anfertigen des Abdrucks zum Herstellen des Zahnersatzes ermöglicht. Zudem ist das Emergenzelement maschinell gefertigt. Damit ist auch eine gleichbleibende Qualität verbunden, die vom handwerklichen Erstellen eines vergleichbaren Emergenzprofils nicht erreichbar ist.

Gemäß einer Ausführungsform des erfindungsgemäßen Abdruckpfostens weist das Pfostenelement in Richtung seiner Längserstreckung eine Ausnehmung auf, die zur Aufnahme einer Befestigungsschraube geeignet ist. Damit ist es möglich, dass das Pfostenelement mittels der Befestigungsschraube mit dem Implantat zu verbinden. Dabei ist ein Schraubenkopf der Befestigungsschraube einerseits in der Ausnehmung gehalten oder geführt, andererseits ragt das Gewinde der Befestigungsschraube über eine Stirnseite des Pfostenelements hinaus, so dass das Gewinde in das Implantat einschraubbar ist. Der Schraubenkopf liegt beispielsweise auf einem Absatz innerhalb der Ausnehmung auf. Der Schraubenkopf kann aber auch einen solchen Durchmesser aufweisen, der kleiner ist als der kleinste lichte Durchmesser der Ausnehmung. Dann dient die Befestigungsschraube lediglich zur axialen Führung und Positionierung des Abdruckpfostens. Die Verbindung von Pfostenelement des Abdruckpfostens mit dem Implantat ist dann durch die Berührstelle der beiden Bauteile miteinander gegeben. Durch den Vorgang des Erstellens des Abdrucks zum Herstellen des Zahnersatzes wird der Abdruckpfosten nämlich gegen das Implantat gedrückt und ist derart an seiner korrekten axialen Position gehalten und mit diesem verbunden. Bei einer weiteren Möglichkeit den Abdruckpfosten mit dem Implantat zu verbinden ist es vorgesehen, dass das Pfostenelement auf seiner zum Implantat weisenden Seite ein Gewinde hat, mit dem das Pfostenelement unmittelbar das Implantat einschraubbar ist.

Entsprechend einer besonders bevorzugten Variante des erfindungsgemäßen Abdruckpfostens ist die zum Emergenzelement weisende Oberfläche des axialen Abschnitts am Pfostenelement zylindermantelförmig ausgestaltet. Mit dieser Formgebung ist ein besonders einfaches Aufsetzen und Verbinden des Emergenzelements auf beziehungsweise mit dem Pfostenelement erreicht. Zudem ist eine besonders leichte Führung des Emergenzelements beim Aufsetzen auf das Pfostenelement ermöglicht.

Gemäß einer bevorzugten Ausgestaltungsvariante des Abdruckpfostens steht eine zum Emergenzelement weisende Oberfläche des axialen Abschnitts am Pfostenelement teilweise mit dem Emergenzelement in Verbindung. Der axiale Abschnitt am Pfostenelement muss also nicht zwangsläufig zum Beispiel komplett zylinderförmige sein. Es können nämlich auch Nuten oder andere Markierungen angebracht sein, um beispielsweise das Erreichen einer bestimmten Position des Emergenzelements be sonders einfach zu erkennen oder zu bestimmen.

Das Positionierungselement ist als Kragen am Emergenzelement ausgestaltet, der zumindest teilweise einen kleineren Durchmesser als der Innendurchmesser des Emergenzelements aufweist, wobei das Pfostenelement einen Anschlag ausweist, der auf den Kragen angepasst ist, und wobei der Kragen am Anschlag anliegt. Der Anschlag kann auf der Seite des axialen Abschnitts am Pfostenelement gelegen sein, der zum Implantat weist. Besonders vorteilhaft ist es jedoch, wenn der Anschlag auf der zum Implantat abgewandten Seite des axialen Abschnitts am Pfostenelement gelegen ist. Dann ist das Pfostenelement insbesondere so ausgestaltet, dass dessen axialer Abschnitt den größten Durchmesser aufweist. Alle anderen Durchmesser am Pfostenelement sind zudem kleiner als der lichte Durchmesser des Kragens. Auf diese Weise ist sichergestellt, dass das Emergenzelement gewechselt werden kann, während das Pfostenelement auf dem Implantat montiert beziehungsweise aufgesteckt ist.

Eine weitere Ausgestaltung des Abdruckpfostens ist dadurch gekennzeichnet, dass ein zusätzliches Positionierungselement als eine aufeinander angepasste Nut-und-Anformung-Kombination am Emergenzelement beziehungsweise am Pfostenelement ausgestaltet ist. Dabei ist es für den Erfindungsgedanken unerheblich, ob die Nut am Emergenzelement und die Anformung am Pfostenelement, insbesondere am axialen Abschnitt, angeordnet sind oder umgekehrt. Wichtig ist insbesondere, dass die Nut-und-Anformung-Kombination so ausgestaltet ist, dass ein leichter Wechsel des Emergenzelements vornehmbar ist. Das ist erreicht, indem entweder die Anformung beziehungsweise die Feder so klein gehalten ist, dass der Widerstand beim Einfügen oder Einrasten in die Nut leicht durch den behandelnden Arzt überwindbar ist. Dazu ist das Emergenzelement bevorzugt aus einem entsprechend flexiblen Material hergestellt, beispielsweise aus Polyetheretherketon (PEEK).

Die Verbindung zwischen dem Pfostenelement und dem Emergenzelement ist dadurch gekennzeichnet, dass der Innendurchmesser des Emergenzelements auf den Außendurchmesser eines axialen Abschnitts mit einer Presspassung als Verbindung aufeinander angepasst ist. Die Presspassung ist dabei so gewählt, dass ein leichtes Aufstecken auf beziehungsweise Abziehen von einem gewählten Emergenzelement auf das Pfostenelement durch den behandelnden Zahnarzt besonders einfach erfolgen kann. Auch ein schnelles Wechseln eines Emergenzelements auf dem Pfostenelement und ein Ersetzen durch ein anderes gewähltes Emergenzelement sind hierdurch besonders einfach und vergleichsweise schnell ermöglicht.

Entsprechend einer besonders bevorzugten Variante des erfindungsgemäßen Abdruckpfostens weist ein dem Pfostenelement abgewandter Bereich des Emergenzelements eine der Gingiva beim Zahnimplantat angepasste Form auf. Die Form der Gingiva wurde zuvor nämlich durch einen Gingivaformer bestimmt beziehungsweise gestaltet. Somit ist die Form der Gingiva grundsätzlich bekannt beziehungsweise durch den verwendeten Gingivaformer vorgegeben worden. Durch eine Harmonisierung der Formen von Gingivaformer und Emergenzelement für den Bereich, der jeweils zur Gingiva weist, ist es besonders leicht möglich ein Emergenzelement auszuwählen, das zusammen mit dem Pfostenelement einen Abdruckpfosten bereitstellt, der im Bereich der Gingiva genau zu der vom Gingivaformer geformten Gingiva passt.

Für den Abdruckpfosten ist es zudem vorgesehen, dass das das Emergenzelement aus Titan, einem anderen Metall, einer Metall- oder Titanlegierung, einem Kunststoff, einem flexiblen Kunststoff, Titanoxid, einer Keramik oder Polyetheretherketon (PEEK) gefertigt ist.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigt:

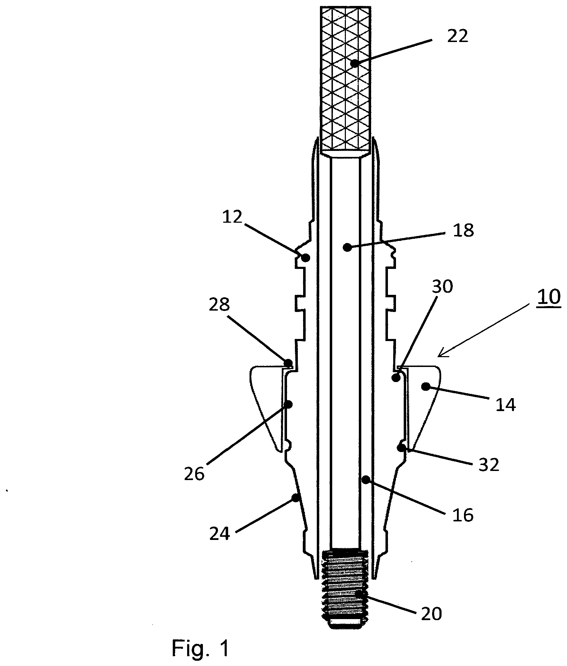

- Fig. 1: eine Ansicht auf einen exemplarischen Abdruckpfosten.

Die Fig. 1 als einzige Figur zeigt eine Ansicht auf einen exemplarischen Abdruckpfosten 10, der ein Pfostenelement 12 sowie ein Emergenzelement 14 aufweist. Das Pfostenelement 12 hat eine Durchgangsausnehmung 16 als Ausnehmung entlang seiner Längserstreckung sowie entlang einer gedachten Symmetrielinie. Zudem ist in der Durchgangsausnehmung 16 eine Führungsschraube 18 gezeigt, bei der - in der Figur unten - ein Gewinde 20 angebracht ist. Mit dem Gewinde 20 ist die Führungsschraube 18 in ein, in der Figur nicht gezeigtes, Implantat eindrehbar. Auf diese Weise ist das Pfostenelement 12 des Abdruckpfostens 10 mit dem Implantat zu einer Anordnung von einem Implantat mit Abdruckpfosten verbunden. Ein Schraubenkopf 22 weist im gezeigten Beispiel einen kleineren Durchmesser auf, als ein lichter Durchmesser der Durchgangsausnehmung 16. Auf diese Weise ist das Pfostenelement 12 axial entlang der Führungsschraube 18 geführt. Zur exakten axialen Positionierung des Pfostenelements 12 am Implantat ist auf der zum Implantat weisenden Seite ein konischer Abschnitt 24 vorgesehen, der mit einem entsprechenden negativen konischen Abschnitt am Implantat korrespondiert und derart mit dem Implantat verbunden ist. Zudem ist hierdurch ein axialer Anschlag zu Positionierung des Pfostenelements 12 gebildet.

Am Pfostenelement 12 ist ein zylindrischer Abschnitt 26 ausgebildet, also ein Abschnitt, dessen radial nach außen weisende Fläche beziehungsweise Seite zylindermantelförmig ist. Mit dem zylindrischen Abschnitt 26 ist das Emergenzelement 14 durch eine Presspassung verbunden. Die Presspassung ist dabei so ausgelegt, dass das Emergenzelement 14 für das Anfertigen eines Abdruckes durch den Zahnarzt sicher am Pfostenelement 12 gehalten ist und zudem durch den Zahnarzt ohne Werkzeuge - also mit manueller Kraft - entfernbar ist. Für eine exakte axiale Positionierung des Emergenzelements 14 auf dem Pfostenelement 12 ist zudem ein Kragen 28 als Positionierungselement am Emergenzelement 14 angeformt, der an einem Absatz 30, der als axialer Anschlag für den Kragen 28 dient, anliegt. Der zylindrische Abschnitt 26 ist in axialer Richtung des Pfostenelements 12 so gelegen, dass ein Emergenzelement 14, das mit seinem Kragen 28 am Absatz 30 anliegt, nach dem Aufschrauben des Abdruckpfostens 10 auf ein im Kiefer befindliches Implantat genau an der Stelle positioniert ist, an dem zuvor ein Gingivaformer gelegen war. In dem hier beschriebenen Beispiel ist das Pfostenelement 12 aus Titan hergestellt, während das Emergenzelement 14 aus Polyetheretherketon (PEEK) gefertigt ist. Mit dieser Materialkombination ist die vorstehend beschriebene Presspassung besonders einfach und vorteilhaft realisierbar.

Alternativ oder zusätzlich zum Kragen 28 ist eine Positionierung des Emergenzelements 14 am Pfostenelement 12 auch mit einer Nut- und Federverbindung möglich. Die Feder als Positionierungselement kann hierbei beispielsweise durch eine Anformung an der zum Pfostenelement weisenden Seite des Emergenzelements 14 realisiert sein, was in der Figur jedoch nicht gezeigt ist. In der Figur ist jedoch die für die Nut- und Federverbindung erforderliche Nut 32 vorgesehen und als weiteres alternatives Positionierungselement am zylindrischen Abschnitt 26 gezeigt, in der die Feder oder ein Rastring gegebenenfalls verrastbar oder einbringbar ist. Ein Vorteil bei einer Nut- und Federverbindung besteht zudem darin, dass die Anformung an verschiedenen Emergenzelementen an unterschiedlichen axialen Positionen erfolgen kann, so dass eine Vielzahl von Varianten mit verschiedenen axialen Positionen von an sich gleichgestalteten Emergenzelementen besonders einfach realisierbar ist.

### Bezugszeichenliste

- 10: Abdruckpfosten
- 12: Pfostenelement
- 14: Emergenzelement
- 16: Durchgangsausnehmung
- 18: Führungsschraube
- 20: Gewinde
- 22: Schraubenkopf
- 24: konischer Abschnitt
- 26: zylindrischer Abschnitt
- 28: Kragen
- 30: Absatz
- 32: Nut

## Patentansprüche

1. Abdruckpfosten (10) zum Verbinden mit einem Zahnimplantat, der ein Pfostenelement (12) aufweist, das mit dem Zahnimplantat verbindbar ist, wobei ein ringförmiges Emergenzelement (14) mit dem Pfostenelement (12) lösbar verbunden ist, wobei durch ein Positionierungselement das Emergenzelement (14) an einer vorgebbaren axialen Position einer Längserstreckung des Pfostenelements (12) gehalten ist, wobei ein Innendurchmesser des Emergenzelements (14) auf einen Außendurchmesser eines axialen Abschnitts am Pfostenelement (12) angepasst ist und wobei das Emergenzelement (14) mit dem axialen Abschnitt durch eine Presspassung verbunden ist,
**dadurch gekennzeichnet, dass** das Positionierungselement als Kragen (28) am Emergenzelement (14) ausgestaltet ist, der zumindest teilweise einen kleineren Durchmesser als der Innendurchmesser des Emergenzelements (14) aufweist, wobei das Pfostenelement (12) einen Anschlag ausweist, der auf den Kragen (28) angepasst ist, und wobei der Kragen (28) am Anschlag anliegt.

2. Abdruckpfosten (10) nach Anspruch 1, **dadurch gekennzeichnet, dass** das Pfostenelement (12) in Richtung seiner Längserstreckung eine Ausnehmung aufweist, die zur Aufnahme einer Schraube geeignet ist.

3. Abdruckpfosten (10) nach Anspruch 1 oder 2, **dadurch gekennzeichnet, dass** die zum Emergenzelement (14) weisende Oberfläche des axialen Abschnitts am Pfostenelement (12) zylindermantelförmig ist.

4. Abdruckpfosten (10) nach einem der vorherigen Ansprüche, **dadurch gekennzeichnet, dass** eine zum Emergenzelement (14) weisende Oberfläche des axialen Abschnitts am Pfostenelement (12) teilweise mit dem Emergenzelement (14) in Verbindung steht.

5. Abdruckpfosten (10) nach einem der vorherigen Ansprüche, **dadurch gekennzeichnet, dass** ein zusätzliches Positionierungselement als eine aufeinander angepasste Nut-und-Anformung-Kombination am Emergenzelement (14) beziehungsweise am Pfostenelement (12) ausgestaltet ist.

6. Abdruckpfosten (10) nach einem der vorherigen Ansprüche, **dadurch gekennzeichnet, dass** ein dem Pfostenelement (12) abgewandter Bereich des Emergenzelements (14) eine Form aufweist, die auf eine durch einen Gingivaformer geformten Gingiva angepasst ist.

7. Abdruckpfosten (10) nach einem der vorherigen Ansprüche, **dadurch gekennzeichnet, dass** das Emergenzelement (14) und/ oder das Pfostenelement (12) aus Titan, einem anderen Metall, einer Legierung, einem Kunststoff, einem flexiblen Kunststoff, Titanoxid, einer Keramik oder Polyetheretherketon (PEEK) gefertigt ist.

## Claims

1. Impression post (10) for connecting to a dental implant, which has a post element (12) which can be connected to the dental implant, wherein an annular emergence element (14) is detachably connected to the post element (12), wherein the emergence element (14) is held at a predefinable axial position of a longitudinal extent of the post element (12) by a positioning element, wherein an inner diameter of the emergence element (14) is adapted to an outer diameter of an axial portion, on the post element (12), and wherein the emergence element (14) is connected to the axial portion by an interference fit,
**characterized in that** the positioning element is designed as a collar (28) on the emergence element (14), which at least partially has a smaller diameter than the inner diameter of the emergence element (14), wherein the post element (12) has a stop which is adapted to the collar (28), and wherein the collar (28) bears against the stop.

2. Impression post (10) according to Claim 1, **characterized in that** the post element (12) has, in the direction of its longitudinal extent, a cutout which is suitable for receiving a screw.

3. Impression post (10) according to Claim 1 or 2, **characterized in that** the surface of the axial portion on the post element (12) facing towards the emergence element (14) is in the shape of a cylinder shell.

4. Impression post (10) according to any of the preceding claims, **characterized in that** a surface of the axial portion on the post element (12) facing towards the emergence element (14) is partially connected to the emergence element (14).

5. Impression post (10) according to any of the preceding claims, **characterized in that** an additional positioning element is designed as a mutually adapted groove-and-protuberance combination on the emergence element (14) and on the post element (12).

6. Impression post (10) according to any of the preceding claims, **characterized in that** a region of the emergence element (14) facing away from the post element (12) has a shape which is adapted to a gingiva formed by a gingiva former.

7. Impression post (10) according to any of the preceding claims, **characterized in that** the emergence element (14) and/or the post element (12) are/is manufactured from titanium, another metal, an alloy, a plastic, a flexible plastic, titanium oxide, a ceramic or polyetheretherketone (PEEK).

## Revendications

1. Pilier d'empreinte (10) destiné à être relié à un implant dentaire, comprenant un élément de pilier (12) pouvant être relié à l'implant dentaire, un élément d'émergence annulaire (14) étant relié de manière amovible à l'élément de pilier (12), l'élément d'émergence (14) étant maintenu, par un élément de positionnement, à une position axiale prédéfinissable le long d'une extension longitudinale de l'élément de pilier (12), un diamètre intérieur de l'élément d'émergence (14) étant adapté à un diamètre extérieur d'une section axiale sur l'élément de pilier (12), et l'élément d'émergence (14) étant relié à la section axiale par un ajustement serré,
**caractérisé en ce que** l'élément de positionnement est conçu sous forme de collerette (28) sur l'élément d'émergence (14), laquelle présente au moins partiellement un diamètre inférieur au diamètre intérieur de l'élément d'émergence (14), l'élément de pilier (12) présentant une butée adaptée à la collerette (28), et la collerette (28) étant en appui contre la butée.

2. Pilier d'empreinte (10) selon la revendication 1, **caractérisé en ce que** l'élément de pilier (12) présente, dans la direction de son extension longitudinale, un évidement adapté à recevoir une vis.

3. Pilier d'empreinte (10) selon la revendication 1 ou 2, **caractérisé en ce que** la surface de la section axiale de l'élément de pilier (12) orientée vers l'élément d'émergence (14) est en forme d'enveloppe cylindrique.

4. Pilier d'empreinte (10) selon l'une quelconque des revendications précédentes, **caractérisé en ce qu'**une surface de la section axiale de l'élément de pilier (12) orientée vers l'élément d'émergence (14) est partiellement en liaison avec l'élément d'émergence (14).

5. Pilier d'empreinte (10) selon l'une quelconque des revendications précédentes, **caractérisé en ce qu'**un élément de positionnement supplémentaire est conçu sous forme d'une combinaison rainure-saillie adaptée l'une à l'autre sur l'élément d'émergence (14) ou sur l'élément de pilier (12), respectivement.

6. Pilier d'empreinte (10) selon l'une quelconque des revendications précédentes, **caractérisé en ce qu'**une région de l'élément d'émergence (14) éloignée de l'élément de pilier (12) présente une forme adaptée à une gencive formée par un conformateur gingival.

7. Pilier d'empreinte (10) selon l'une quelconque des revendications précédentes, **caractérisé en ce que** l'élément d'émergence (14) et/ou l'élément de pilier (12) est fabriqué en titane, en un autre métal, en un alliage, en une matière plastique, en une matière plastique flexible, en oxyde de titane, en une céramique ou en polyétheréthercétone (PEEK).
